(19) Europäisches Patentamt
European Patent Office
Office européen des brevets

(11) EP 2 940 064 A1

(12) **EUROPEAN PATENT APPLICATION**
published in accordance with Art. 153(4) EPC

(43) Date of publication:
**04.11.2015 Bulletin 2015/45**

(51) Int Cl.:
***C08J 5/00*** *(2006.01)*   ***C08L 23/06*** *(2006.01)*

(21) Application number: **12890740.9**

(86) International application number:
**PCT/JP2012/084186**

(22) Date of filing: **28.12.2012**

(87) International publication number:
**WO 2014/103054 (03.07.2014 Gazette 2014/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Mitsubishi Gas Chemical Company, Inc.**
**Tokyo 100-8324 (JP)**

(72) Inventors:
• **ISHII, Kentaro**
**Hiratsuka-shi**
**Kanagawa 254-0016 (JP)**
• **KATOU, Tomonori**
**Hiratsuka-shi**
**Kanagawa 254-0016 (JP)**
• **KOUNO, Kenji**
**Hiratsuka-shi**
**Kanagawa 254-0016 (JP)**
• **KOBAYASHI, Hiroshi**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

(54) **POLYETHYLENE-BASED STRUCTURE**

(57)   A polyethylene-based structure of the present invention is a polyethylene-based structure composed of a resin composition containing 60 to 90% by mass of a polyethylene (A), 5 to 35% by mass of an acid-modified polyethylene (B), and 5 to 35% by mass of a m-xylylene group-containing polyamide (C), wherein the m-xylylene group-containing polyamide (C) is dispersed in the form of layers in the resin composition which constitutes the structure, and the acid value of the acid-modified polyethylene (B) is from 5 to 30 mg/g.

EP 2 940 064 A1

**Description**

Technical Field

The present invention relates to a polyethylene-based structure having excellent barrier property and strength.

Background Art

Containers for storing hydrocarbons or various chemicals or pipes for transporting these materials include, for example, bottles for chemicals, fuel tanks for automobiles or small size engines, fuel pipes, etc. Many of the metals or glasses conventionally used as raw materials of these members have been now replaced with a plastic material as an alternative material. The plastic material has advantages such as a light weight, no need of a rust-proof treatment, less breakage, and a high degree of freedom of shape as compared with metals or glasses.

In most of the above applications, a high-density polyethylene (hereinafter sometimes abbreviated as "HDPE") is used. The HDPE has excellent mechanical strength, molding processability, and economical efficiency. However, the HDPE has a disadvantage that an article stored in a container is likely to permeate through an HDPE wall and to be scattered in the air. In recent years, regulations on the amount of permeation of gasoline for gasoline tanks made of a resin and peripheral members thereof have become stricter year by year from the viewpoint of environmental pollution, and therefore, the existing containers made of HDPE encounter difficultly in complying with such regulations. As a result, there is an increasing demand for techniques for enhancing the barrier property against gasoline.

As a method of enhancing the fuel barrier property of an HDPE container, there is known a method of subjecting the inner surface of the HDPE container to a freon treatment or a sulfone treatment (see, for example, Patent Document 1). In addition, there is known a method of forming an HDPE container having a multilayer structure by laminating a barrier resin such as an ethylene-vinyl alcohol copolymer resin (hereinafter sometimes abbreviated as "EVOH") as an intermediate layer (see, for example, Patent Documents 2 and 3). Further, as a method of enhancing the fuel barrier property of an HDPE container, there is known a method of producing a single-layer container from a composition prepared by blending a polyamide resin such as nylon 6, 66 or EVOH together with an adhesive resin into HDPE (see, for example, Patent Documents 4 and 5). Further, there is also disclosed a method in which poly-m-xylylene adipamide (hereinafter sometimes abbreviated as "N-MXD6") having a more excellent barrier property than nylon 6, 66 is used in the above blend single-layer container (see, for example, Patent Documents 6 and 7).

Citation List

Patent Documents

    Patent Document 1: JP-A 60-006735
    Patent Document 2: JP-A 06-328634
    Patent Document 3: JP-A 07-052333
    Patent Document 4: JP-A 55-121017
    Patent Document 5: JP-A 58-209562
    Patent Document 6: JP-A 2005-206806
    Patent Document 7: JP-A 2007-177208

Summary of Invention

Technical Problem

The method disclosed in Patent Document 1 in which the inner surface of the HDPE container is subjected to a Freon treatment or a sulfone treatment has an advantage that the production facility for the conventionally produced HDPE container can be used as such, but also has disadvantages that it is necessary to ensure safety against the handling of a harmful gas during a fluorine treatment, a recovery method after the treatment is problematic, and moreover, it is difficult to carry out a quality examination after a fluorinating treatment, and so on.

According to the multilayer container disclosed in Patent Documents 2 and 3 which is formed from HDPE and EVOH, a more excellent barrier property than the conventional HDPE container can be imparted, and also the barrier performance of the container can be controlled according to the thickness of the EVOH layer laminated therein, and therefore, a container having a desired barrier property is easily produced. However, this container cannot be produced in the production facility for the HDPE single-layer container, and it is necessary to introduce a multilayer blow-molding device equipped with at least three or more extruders for extruding HDPE, an adhesive resin, and EVOH, respectively, and therefore, an economical problem remains. Further, a container produced by a direct blow method inevitably has a so-called pinch-off portion in which a parison is bitten off by a mold; however, in the above-mentioned multilayer container, a mating face of the inner HDPE layer is formed in the section of the pinch-off portion, so that a portion in which the EVOH layer is cut off is formed. When the container has a very thin wall thickness, the thickness of the mating face of the inner HDPE layer in the bitten-off portion becomes very thin, and therefore, there are practically no significant problems. However, in the case of a container requiring a high strength such as a fuel container, the thickness of an inner HDPE layer is generally set to be thick, and therefore, the container has a disadvantage that fuel easily permeates through the mating face.

On the other hand, in the method described in Patent Document 4 or 5, nylon 6, 66 is dispersed in the form of layers in HDPE, and a single-layer container is formed from a composite material. According to the method, the facility for producing the conventional HDPE container can be substantially used, and also, since the polyamide resin is dispersed in the form of layers, a barrier property similar to that of a multilayer structure can be imparted. Further, a resin material forming cut chips or purge debris generated upon production of the container is the same as the resin material forming the container itself, and therefore, unlike the container subjected to a fluorinating treatment, the cut chips or purge debris can be reused as the material constituting the container as a recycling material.

However, the barrier property of nylon 6, 66 used as the barrier resin itself is not so excellent, and therefore, the property is often insufficient in recent years in which the requirements for the barrier property have become stricter. In addition, in order to bring the dispersion state of nylon 6, 66 to an ideal state so that a good barrier property can be exhibited, it is necessary to strictly control the molding processing conditions, and therefore, the method cannot be applied in many cases in recent years in which the shape of containers is diversified.

Further, according to the method disclosed in Patent Document 6 or 7 in which N-MXD6 is dispersed in the form of layers in place of nylon 6, 66, since the barrier resin itself has a considerably excellent barrier property, it is possible to obtain a container having a more excellent barrier property than the container produced using nylon 6, 66.

However, the requirements for the barrier property have become stricter year by year, and containers which satisfy the strict requirements for the barrier property and have an excellent strength cannot be provided in some cases.

An object of the present invention is to provide a polyethylene-based structure which can satisfy the recent strict requirements for barrier property and has an excellent strength.

Solution to Problem

The present invention provides the following polyethylene-based structure.

That is, the polyethylene-based structure is a polyethylene-based structure comprising a resin composition containing 60 to 90% by mass of a polyethylene (A), 5 to 35% by mass of an acid-modified polyethylene (B), and 5 to 35% by mass of a m-xylylene group-containing polyamide (C), wherein the m-xylylene group-containing polyamide (C) is dispersed in the form of layers in the structure and the acid value of the acid-modified polyethylene (B) is from 5 to 30 mg/g.

Advantageous Effects of Invention

The polyethylene-based structure according to the present invention has an excellent barrier property against fuels and chemicals and an excellent barrier property against various gases such as oxygen, and further exhibits a strength suitable for practical use.

Brief Description of Drawings

    Fig. 1 is an SEM image of a section of a side wall of a tank obtained in Example 1.
    Fig. 2 is an SEM image of a section of a side wall of a tank obtained in Comparative Example 2.

Description of Embodiments

Hereinafter, an embodiment of the present invention will be described.

(Resin Composition)

The polyethylene-based structure according to the present invention is formed from a resin composition containing a polyethylene (A), an acid-modified polyethylene (B), and a m-xylylene group-containing polyamide (C). Hereinafter, these respective components contained in the resin composition will be described in detail.

(Polyethylene (A))

The polyethylene (A) used in the present invention is a main material constituting the structure. The polyethylene (A) used in the present invention preferably has a specific melt viscosity, a specific molecular weight, and a specific crystallinity from the viewpoints of prevention of the occurrence of drawdown causing unevenness in thickness of the resulting molded article, enhancement of the strength of the structure itself, and a problem of a breakage, a crack, etc. upon dropping or upon applying an impact thereto.

As an index of the crystallinity of the polyethylene, a density may be used. The density of the polyethylene (A) used in the present invention is preferably from 0.94 to 0.97 $g/cm^3$, more preferably from 0.943 to 0.965 $g/cm^3$, and particularly preferably from 0.945 to 0.96 $g/cm^3$. When the density of the polyethylene (A) is 0.94 $g/cm^3$ or more, a sufficient crystallinity is obtained, and therefore, the contents to be stored in the structure can be stored regardless of the types of the contents. Further, when the density is 0.97 $g/cm^3$ or less, the polyethylene (A) is not brittle like glass, and therefore, a strength suitable for practical use can be exhibited as the structure.

As an index for the melt viscosity and the molecular weight of a polyethylene, a melt flow rate (MFR) may be typically used. The MFR of the polyethylene (A) used in the present invention is preferably from 0.1 to 1 (g/10 min, 190°C, 2.16 kgf), more preferably from 0.1 to 0.6 (g/10 min, 190°C, 2.16 kgf), further more preferably from 0.1 to 0.55 (g/10 min, 190°C, 2.16 kgf), and most preferably from 0.15 to 0.40 (g/10 min, 190°C, 2.16 kgf) as a value measured according to the method described in JIS K 7210.

In general, a m-xylylene group-containing polyamide has a larger density than a polyethylene, so that a polyethylene in which a m-xylylene group-containing polyamide is compounded tends to cause large drawdown upon molding processing as compared with a polyethylene solely. For this reason, in the present invention, by setting the MFR of the polyethylene (A) to 1 or less, the occurrence of drawdown upon molding processing can be suppressed, and moreover, the resulting structure has excellent thickness accuracy. Further, when the MFR of the polyethylene (A) is 0.1 or more, the melt viscosity is suitable upon molding, and also the dispersion state of the m-xylylene group-containing polyamide (C) in the resin composition constituting the resulting structure is favorable, and thus, a molded article having an excellent barrier property can be obtained.

Further, to the polyethylene (A), an additive such as an antioxidant, a delustering agent, a heat stabilizer, a weathering stabilizer, an ultraviolet absorber, a nucleating agent, a plasticizer, a flame retardant, an antistatic agent, an anti-coloring agent, or a lubricant, or the like can be added as long as the effects of the present invention are not impaired. Further, any of various materials may be mixed therein without being limited to those described above. The polyethylene (A) is preferably composed of a high-density polyethylene alone; however, the polyethylene (A) may contain another polyethylene such as a low-density polyethylene, a medium-density polyethylene, or a linear low-density polyethylene, a colored master batch obtained by adding a pigment to a polyethylene, or the like as long as the effects of the present invention are not impaired.

(Acid-Modified Polyethylene (B))

The acid-modified polyethylene (B) used in the present invention is a material which is prepared by graft-modifying a polyethylene with an unsaturated carboxylic acid or an anhydride thereof, and is generally widely used as an adhesive resin.

Specific examples of the unsaturated carboxylic acid or anhydride thereof include acrylic acid, methacrylic acid, $\alpha$-ethyl acrylic acid, maleic acid, fumaric acid, itaconic acid, citraconic acid, tetrahydrophthalic acid, chloromaleic acid, butenyl succinic acid, and anhydrides thereof. Among these, maleic acid and maleic anhydride are preferably used. As a method of obtaining an acid-modified polyethylene by graft-copolymerizing a polyethylene with the above-mentioned unsaturated carboxylic acid or anhydride thereof, various conventionally known methods can be used. For example, a method in which a polyethylene is melted using an extruder or the like, and then a graft monomer is added to the molten polyethylene to effect copolymerization, a method in which a polyethylene is dissolved in a solvent, and then a graft monomer is added to the resulting solution to effect copolymerization, a method in which an aqueous suspension of a polyethylene is prepared, and then a graft monomer is added to the aqueous suspension to effect copolymerization, and the like can be used.

Further, the m-xylylene group-containing polyamide (C) is a relatively hard material, and therefore, a crack or peeling is liable to occur at an interface when an impact or the like is applied to the structure, so that the strength or barrier property of the structure may be impaired. For this reason, by using a material which has a relatively low density and is relatively soft as the acid-modified polyethylene (B) to be used in the present invention, a decrease in the impact strength caused by the m-xylylene group-containing polyamide (C) is lessened, and thus, it is effective in maintaining the strength suitable for practical use of the structure.

From these viewpoints, the density of the acid-modified polyethylene (B) used in the present invention is preferably from 0.90 to 0.96 g/cm$^3$, more preferably from 0.905 to 0.945 g/cm$^3$, and particularly preferably from 0.91 to 0.93 g/cm$^3$. When the density of the acid-modified polyethylene (B) is 0.90 g/cm$^3$ or more, a good compatibility is obtained between the preferred polyethylene (A) of the present invention and the acid-modified polyethylene (B), and moreover, the adhesiveness to the m-xylylene group-containing polyamide (C) is enhanced, whereby the resulting structure has excellent strength and barrier property. Further, when the density of the acid-modified polyethylene (B) is 0.96 g/cm$^3$ or less, the acid-modified polyethylene (B) has a moderate softness, and therefore, even if an impact or the like is applied to the structure, a decrease in the strength or barrier property can be prevented.

In the present invention, the acid-modified polyethylene (B) plays a role in bonding the polyethylene (A) and the m-xylylene group-containing polyamide (C) to each other. Then, in the resin composition constituting the structure of the present invention, the m-xylylene group-containing polyamide (C) is considered to be in a state of chemical bonding to the acid-modified substituent of the acid-modified polyethylene (B), and as a result, the m-xylylene group-containing polyamide (C) is present in the vicinity of the acid-modified polyethylene (B), and thus, a difference in acid modification ratio largely contributes to the adhesive strength. Due to this, in the present invention, by adjusting the acid modification ratio of the acid-modified polyethylene (B) within a specific range, the adhesive strength between the polyethylene (A) and the m-xylylene group-containing polyamide (C) can be largely enhanced, and as a result, the barrier property of the resulting structure is largely enhanced.

As an index of the acid modification ratio of the acid-modified polyethylene (B), an acid value may be used. The acid value in the present invention is measured according to the method described in JIS K 0070. In the present invention, the acid value of the acid-modified polyethylene (B) is set to 5 to 30 mg/g. In the present invention, if the acid value of the acid-modified polyethylene (B) is less than 5 mg/g, the adhesiveness between the polyethylene (A) and the m-xylylene group-containing polyamide (C) in the resin composition is insufficient, so that a void occurs at a bonding interface between the two materials, and as a result, the barrier property of the resulting structure is deteriorated, and moreover, the strength of the structure may be deteriorated. On the other hand, if the acid value of the acid-modified polyethylene (B) exceeds 30 mg/g, larger drawdown upon molding processing occurs, so that the thickness accuracy or

barrier property of the structure may be deteriorated.

The acid value of the acid-modified polyethylene (B) is more preferably from 10 to 30 mg/g, and particularly preferably from 15 to 25 mg/g. By setting the acid value within such a range, the barrier property and the strength of the structure, particularly the strength of the structure at low temperature can be enhanced with a small amount of the acid-modified polyethylene (B) without causing drawdown.

Further, as an index of the acid modification ratio also in consideration of the amount of the m-xylylene group-containing polyamide (C), there is a value A which is obtained by converting the acid value of the acid-modified polyethylene (B) in the resin composition constituting the structure into the acid value per unit mass of the m-xylylene group-containing polyamide (C) in the resin composition and which is represented by the following formula (1). In the present invention, by further taking the value A into consideration, it is possible to compound the acidic group according to the compounding amount of the m-xylylene group-containing polyamide (C) which is the target to be bonded so as to facilitate the achievement of an appropriate adhesive property, and therefore, such a consideration is preferred.

$$A = A(b) \times P(b) / P(c) \qquad (1)$$

(In the above formula, A(b) represents the acid value of the acid-modified polyethylene (B), P(b) represents the mass ratio of the acid-modified polyethylene (B) in the resin composition constituting the polyethylene-based structure, and P(c) represents the mass ratio of the m-xylylene group-containing polyamide (C) in the resin composition constituting the polyethylene-based structure.)

That is, the value A is calculated by multiplying the acid value of the acid-modified polyethylene (B) [A(b)] by the mass ratio of the acid-modified polyethylene (B) in the resin composition [P(b)], and dividing the resulting value by the mass ratio of the m-xylylene group-containing polyamide (C) in the resin composition [P(b)].

In the present invention, the value A is preferably from 5 to 40 mg/g, more preferably from 10 to 40 mg/g, further more preferably from 20 to 40 mg/g, and particularly preferably from 25 to 40 mg/g. By setting the value A to 5 mg/g or more, the adhesiveness between the polyethylene (A) and the m-xylylene group-containing polyamide (C) in the resin composition is enhanced, and as a result, the strength and barrier property of the structure are enhanced. Further, by setting the value A to 40 mg/g or less, drawdown upon molding processing is less likely to occur. Further, by setting the value A within the range of 15 to 40 mg/g, insufficient adhesion or drawdown is made further less likely to occur.

As for the MFR of the acid-modified polyethylene (B) used in the present invention, it is preferred to use an acid-modified polyethylene having a high melt viscosity from the viewpoints of molding processing stability and retention of the strength of the structure. Specifically, the MFR of the acid-modified polyethylene (B) is preferably from 0.1 to 5 (g/10 min, 190°C, 2.16 kgf), more preferably from 0.3 to 4 (g/10 min, 190°C, 2.16 kgf), further more preferably from 0.5 to 3 (g/10 min, 190°C, 2.16 kgf), and particularly preferably from 1.0 to 2 (g/10 min, 190°C, 2.16 kgf) as a value measured according to the method described in JIS K 7210.

Further, to the acid-modified polyethylene (B), an additive such as an antioxidant, a delustering agent, a heat stabilizer, a weathering stabilizer, an ultraviolet absorber, a nucleating agent, a plasticizer, a flame retardant, an antistatic agent, an anti-coloring agent, or a lubricant, or the like can be added as long as the effects of the present invention are not impaired. Further, any of various materials may be mixed therein without being limited to those described above.

(m-Xylylene Group-Containing Polyamide (C))

The m-xylylene group-containing polyamide (C) used in the present invention is a material which imparts an effect of enhancing the barrier property of the structure. A diamine unit constituting the m-xylylene group-containing polyamide preferably contains a m-xylylenediamine unit in an amount of 70 mol% or more, more preferably 80 mol% or more, and further more preferably 90 mol% or more from the viewpoint of a gas barrier property.

Examples of the diamine which can be used other than m-xylylenediamine include p-xylylenediamine, 1,3-bis(aminomethyl)cyclohexane, 1,4-bis(aminomethyl)cyclohexane, tetramethylenediamine, hexamethylenediamine, nonamethylenediamine, and 2-methyl-1,5-pentanediamine, but are not limited to these.

The dicarboxylic acid unit constituting the m-xylylene group-containing polyamide (C) preferably contains an $\alpha,\omega$-aliphatic dicarboxylic acid in an amount of 50 mol% or more, more preferably 60 mol% or more, and further more preferably 70 mol% or more from the viewpoint of crystallinity.

Examples of the $\alpha,\omega$-aliphatic dicarboxylic acid include suberic acid, adipic acid, azelaic acid, sebacic acid, and dodecanoic acid; however, adipic acid and sebacic acid are preferably used from the viewpoints of a gas barrier property and crystallinity.

Examples of the dicarboxylic acid unit other than the $\alpha,\omega$-aliphatic dicarboxylic acid include alicyclic dicarboxylic acids such as 1,3-cyclohexanedicarboxylic acid and 1,4-cyclohexanedicarboxylic acid, and aromatic dicarboxylic acids such as terephthalic acid, isophthalic acid, orthophthalic acid, xylylenedicarboxylic acid, and naphthalenedicarboxylic acid, but are not limited to these.

Among these, isophthalic acid and 2,6-naphthalenedicarboxylic acid are preferred because a polyamide having an excellent barrier property can be easily obtained without inhibiting a polycondensation reaction upon production of the m-xylylene group-containing polyamide (C). The content of isophthalic acid and 2,6-naphthalenedicarboxylic acid in the dicarboxylic acid unit is preferably 30 mol% or less, more preferably 20 mol% or less, and further more preferably 15 mol% or less from the viewpoints of the dispersibility of the m-xylylene group-containing polyamide (C) in the polyethylene-based structure and the barrier property of the structure.

Further, as a unit constituting the m-xylylene group-containing polyamide (C) other than the above-mentioned diamine unit and dicarboxylic acid unit, a lactam such as $\varepsilon$-caprolactam or laurolactam, an aliphatic aminocarboxylic acid such as aminocaproic acid or aminoundecanoic acid, an aromatic aminocarboxylic acid such as p-aminomethylbenzoic acid, or the like can be used as a copolymerization unit as long as the effects of the present invention are not impaired.

The m-xylylene group-containing polyamide (C) is produced by a melt polycondensation method (melt polymerization method). For example, there is a method in which a nylon salt composed of a diamine and a dicarboxylic acid is polymerized in a molten state in the presence of water while heating under pressure and removing added water and condensed water. Further, the m-xylylene group-containing polyamide (C) is also produced by a method in which a diamine is directly added to a dicarboxylic acid being in a molten state to effect polycondensation. In this method, in order to maintain the reaction system in a uniform liquid state, the diamine is continuously added to the dicarboxylic acid, and during such a period, the polycondensation is allowed to proceed while elevating the temperature of the reaction system such that the reaction temperature is not lowered below the melting point of an oligoamide and a polyamide to be produced.

Further, a phosphorus atom-containing compound may be added to the polycondensation system for production of the m-xylylene group-containing polyamide (C) for obtaining an effect of accelerating the amidation reaction or an effect of preventing coloration upon the polycondensation.

Examples of the phosphorus atom-containing compound include dimethyl phosphinic acid, phenylmethyl phosphinic acid, hypophosphorous acid, sodium hypophosphite, potassium hypophosphite, lithium hypophosphite, ethyl hypophosphite, phenylphosphonous acid, sodium phenylphosphonite, potassium phenylphosphonite, lithium phenylphosphonite, ethyl phenylphosphonite, phenylphosphonic acid, ethylphopsphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, and pyrophosphorous acid. Among these, metal salts of hypophosphorous acid such as sodium hypophosphite, potassium hypophosphite, and lithium hypophosphite are preferably used because these compounds exhibit a high effect of accelerating the amidation reaction and also have an excellent effect of preventing coloration, and sodium hypophosphite is particularly preferred. However, the phosphorus atom-containing compound which can be used in the present invention is not limited to these compounds.

The addition amount of the phosphorus atom-containing compound added to the polycondensation system for production of the m-xylylene group-containing polyamide (C) is preferably from 1 to 500 ppm, more preferably from 5 to 450 ppm, and further more preferably from 10 to 400 ppm in terms of phosphorus atom concentration in the m-xylylene group-containing polyamide (C) from the viewpoint of prevention of coloration of the m-xylylene group-containing polyamide (C) during the polycondensation.

It is preferred that an alkali metal compound or an alkaline earth metal compound is added in combination with the phosphorus atom-containing compound to the polycondensation system for production of the m-xylylene group-containing polyamide (C). In order to prevent coloration of the m-xylylene group-containing polyamide (C) during the polycondensation, it is necessary that the phosphorus atom-containing compound is allowed to be present in a sufficient amount in the polycondensation system, and moreover, in order to control the amidation reaction rate, it is preferred that the alkali metal compound or the alkaline earth metal compound is allowed to coexist therewith in the polycondensation system.

Examples of the alkali metal compound or the alkaline earth metal compound include hydroxides of an alkali metal or an alkaline earth metal such as lithium hydroxide, sodium hydroxide, potassium hydroxide, rubidium hydroxide, cesium hydroxide, magnesium hydroxide, calcium hydroxide, and barium hydroxide, and acetates of an alkali metal or an alkaline earth metal such as lithium acetate, sodium acetate, potassium acetate, rubidium acetate, cesium acetate, magnesium acetate, calcium acetate, and barium acetate; however, an alkali metal compound or an alkaline earth metal compound can be used without being limited to these compounds.

When the alkali metal compound or the alkaline earth metal compound is added to the polycondensation system for production of the m-xylylene group-containing polyamide (C), a value obtained by dividing the molar number of the compound by the molar number of the phosphorus atom-containing compound is preferably from 0.5 to 2.0, more preferably from 0.6 to 1.8, and further more preferably from 0.7 to 1.5. By setting the addition amount of the alkali metal compound or the alkaline earth metal compound within the above-mentioned range, it is possible to suppress the generation of a gel while obtaining an effect of accelerating the amidation reaction by the phosphorus atom-containing compound.

The m-xylylene group-containing polyamide (C) obtained by the melt polycondensation is once withdrawn from the reaction system, pelletized and then dried before use. In addition, the m-xylylene group-containing polyamide (C) may be further subjected to solid-state polymerization in order to increase the polymerization degree. As a heating device to be used in the drying and solid-state polymerization, a continuous type heating and drying device, a rotary drum type heating device to be called a tumble dryer, a conical dryer, or a rotary dryer, or a conical type heating device equipped with a rotating blade therein called a Nauta mixer can be used. However, the method and the device are not limited thereto, and a known method and device can be used. In particular, when the solid-state polymerization of the polyamide is carried out, the rotary drum type heating device among the above-mentioned devices is preferably used because the system can be hermetically sealed, and also the polycondensation is allowed to easily proceed in a state where oxygen causing coloration is removed.

As an index of the polymerization degree of the m-xylylene group-containing polyamide (C), there are several indices; however, a relative viscosity is generally used. The relative viscosity of the m-xylylene group-containing polyamide (C) used in the present invention is preferably from 2.5 to 4.5, more preferably from 3.0 to 4.3, and most preferably from 3.5 to 4.2. As the relative viscosity of the m-xylylene group-containing polyamide (C) is higher, it becomes difficult for the m-xylylene group-containing polyamide (C) to be compatible with the polyethylene (A), and it becomes easy to form a dispersion state in the form of layers. However, when the relative viscosity of the m-xylylene group-containing polyamide (C) is increased, the polymerization time is prolonged so that the production cost is increased. By setting the relative viscosity of the m-xylylene group-containing polyamide (C) within the above-mentioned range, a favorable dispersion state in the form of layers can be formed, and also the production cost can be kept low.

Meanwhile, the relative viscosity as used herein is a ratio of a dropping time (t) of a solution prepared by dissolving 1 g of a polyamide in 100 mL of 96% sulfuric acid as measured at 25°C using a Cannon-Fenske viscometer to a dropping time (t0) of the 96% sulfuric acid itself as measured in the same manner, and is represented by the following formula.

$$\text{Relative Viscosity} = t/t0 \qquad (2)$$

In addition, the amount of a component having a number-average molecular weight as measured by GPC of 1000 or less in the m-xylylene group-containing polyamide (C) used in the present invention is preferably 2% by mass or less, more preferably 1.5% by mass or less, and further more preferably 1% by mass or less from the viewpoints of the appearance and barrier property of the structure. In order to obtain such a m-xylylene group-containing polyamide (C), it is preferred that the m-xylylene group-containing polyamide (C) produced by melt polycondensation is subjected to rinsing with hot water, vacuum drying, or solid-state polymerization so as to remove oligomers therefrom.

To the m-xylylene group-containing polyamide (C), an additive such as an antioxidant, a delustering agent, a heat stabilizer, a weathering stabilizer, an ultraviolet absorber, a nucleating agent, a plasticizer, a flame retardant, an antistatic agent, an anti-coloring agent, a lubricant, or an anti-gelling agent, a clay such as a phyllosilicate, a nano filler, or the like can be added as long as the effects of the present invention are not impaired. In addition, for the purpose of modifying the m-xylylene group-containing polyamide (C), various polyamides such as nylon 6, nylon 66, and non-crystalline nylons produced using an aromatic dicarboxylic acid as a monomer or modified resins thereof, polyolefins or modified resins thereof, elastomers containing styrene in the skeleton thereof or the like may also be added thereto as needed. Further, any of various materials may be mixed therein without being limited to those described above.

(Compounding Ratios of Respective Materials)

The compounding ratios of the respective materials constituting the structure of the present invention are as follows: 60 to 90% by mass of the polyethylene (A), 5 to 35% by mass of the acid-modified polyethylene (B), and 5 to 35% by mass of the m-xylylene group-containing polyamide (C), preferably as follows: 65 to 90% by mass of the polyethylene (A), 5 to 30% by mass of the acid-modified polyethylene (B), and 5 to 30% by mass of the m-xylylene group-containing polyamide (C), and more preferably as follows: 70 to 90% by mass of the polyethylene (A), 5 to 25% by mass of the acid-modified polyethylene (B), and 5 to 25% by mass of the m-xylylene group-containing polyamide (C). However, the sum of the compounding ratios of the three components (A) to (C) does not exceed 100% by mass. By setting the compounding ratios of the respective materials within the above-mentioned range, the barrier property of the structure can be efficiently enhanced, and also a decrease in the strength of the structure can be minimized. The structure of the present invention is preferably composed of the following three components: the polyethylene (A), the acid-modified polyethylene (B), and the m-xylylene group-containing polyamide (C).

Further, in the case where the acid-modified polyethylene (B) having a higher acid value (10 to 30 mg/g or 15 to 25 mg/g) is used, the compounding ratios of the respective materials constituting the structure of the present invention are particularly preferably as follows: 70 to 90% by mass of the polyethylene (A), 5 to 20% by mass of the acid-modified polyethylene (B), and 5 to 20% by mass of the m-xylylene group-containing polyamide (C). The acid-modified polyethylene (B) having a higher acid value is relatively likely to cause drawdown; however, by decreasing the amount of the acid-modified polyethylene (B), drawdown is less likely to occur. Further, the acid-modified polyethylene (B) having a higher acid value provides a high enhancement effect on the adhesive performance in a small amount, and therefore, the barrier property can be significantly enhanced even in a small amount, and thus, a high-performance structure can be obtained at a low cost.

(Other Resins)

In addition, to the resin composition, a polypropylene, the typical examples of which include a propylene homopolymer, an ethylene-propylene block copolymer, an ethylene-propylene random copolymer, or the like; a homopolymer of an α-olefin having 3 to 20 carbon atoms such as polybutene-1 or polymethyl pentene; a copolymer of an α-olefin having 3 to 20 carbon atoms; a copolymer of an α-olefin having 3 to 20 carbon atoms with a cyclic olefin; an monomer; various modified polyethylenes such as an ethylene-ethyl acrylate copolymer and an ethylene-methyl acrylate copolymer; a polystyrene; various polyesters such as polyethylene terephtalate; various polyamides such as nylon 6 and nylon 66; a styrene-butadiene copolymer or a hydrogenated product thereof; various thermoplastic elastomers, or the like can be added other than the above-mentioned materials as long as the effects of the present invention are not impaired. Further, various materials may be mixed therein without being limited to those described above.

(Structure)

The polyethylene-based structure of the present invention is a hollow molded article, more specifically is in the form of a bottle, a tank, a drum, a cup, a tray, a pipe, or the like, preferably is in the form of a tank, a pipe, a drum, or a bottle, and is an article obtained by molding by a known molding method such as a blow method. Further, in the case where the structure is a container in the form of a bottle, a tank, a drum, or the like, the structure is preferably produced by a direct blow method.

In the direct blow method, for example, in the case where the structure is a single-layer container, a molding device equipped with an extruder, an adaptor, a cylindrical die, a mold clamping device, a mold, and a cooling device is used, and the following method is illustrated. A mixed material prepared by dry-blending the polyethylene (A), the acid-modified polyethylene (B), and the m-xylylene group-containing polyamide (C), and in some cases further dry-blending a pulverized material obtained by pulverizing a molded article, are put into the extruder and melt-kneaded therein. The melt-kneaded material is extruded through the adaptor and the cylindrical die into a tubular shape (hereinafter sometimes referred to as a "parison"), and sandwiched by the mold at the time when the parison is extruded into an appropriate length, and then air is blown into the parison to inflate the parison and bring the parison into close contact with the inside of the cooled mold. After cooling, the mold is opened, and the resulting molded container is taken out therefrom.

The m-xylylene group-containing polyamide (C) is dispersed in the form of layers in the structure, and the dispersed m-xylylene group-containing polyamide (C) may partially continue to form a continuous phase. The m-xylylene group-containing polyamide (C) dispersed in the form of layers is preferably in a dispersed state so as to be present alternately with the other resin component in the thickness direction of the structure. Further, in the structure, the m-xylylene group-containing polyamide (C) is preferably disposed more on the outer side than in the center of the thickness of the structure. Incidentally, the structure is generally composed of a single-layer structure formed from the resin composition containing the above-mentioned components (A) to (C).

Further, the polyethylene-based structure of the present invention has a thickness of preferably 0.5 mm or more, more preferably more than 1.5 mm, and most preferably more than 2.5 mm. Further, the thickness thereof is preferably 10 mm or less, and more preferably 5 mm or less.

In the present invention, even if unevenness in thickness is caused due to the use of the acid-modified polyethylene (B) having a high acid value, by making the thickness relatively thick as described above, a decrease in the barrier property, a decrease in the strength, a defect in the appearance, etc. due to the unevenness in thickness are less likely to occur. Incidentally, the thickness is determined by cutting the container horizontally at the half of the height thereof, measuring the thickness at 4 sites on the front, rear, right, and left sides, and calculating the average of the measurements.

As the extruder to be used when the structure of the present invention is produced, a known extruder can be used; however, a single-screw extruder is preferably used because it has an adequate kneading capability and enables stable extrusion even under a high resin pressure. The screw of the single-screw extruder is usually constituted by the following three sections: a feed section for transporting a raw material toward a tip end of the extruder; a compression section for completely melting the resin softened by absorbing heat therein; and a metering section for controlling a discharge amount. In the present invention, as the screw, an ordinary screw can be used without limitation; however, a screw generally to be called a full flight and having no kneading section to be called Dulmage or Maddock is preferably used from the viewpoint of preventing excessive dispersion of the m-xylylene group-containing polyamide (C).

Incidentally, as the screw, in order to facilitate the control of the dispersion state of the m-xylylene group-containing polyamide (C), a rapid compression type screw which has a relatively short compression section is preferably used. As the full flight screw of a rapid compression type, in the case where the number of pitches (one pitch corresponds to the one rotation of the flight) of the entire screw is taken as 100, a screw in which the number of pitches is set as follows: 40 to 60 in the feed section; 5 to 20 in the compression section, and 30 to 50 in the metering section is preferably selected, and more preferred is a screw in which the number of pitches is set as follows: 45 to 55 in the feed section; 10 to 15 in the compression section, and 35 to 45 in the metering section. The distance between the pitches may be arbitrary. In addition, a so-called double flight screw in which the number of flights is set to two in part can also be used.

Further, also in order to maintain such a state that the m-xylylene group-containing polyamide (C) is dispersed in the form of layers by the shear force of the screw, it is preferred that any breaker plate which is generally provided in the extruder head is not provided therein. There is a possibility that due to the pores perforated in the breaker plate, the m-xylylene group-containing polyamide (C) dispersed in the form of layers in the extruder may be cut into pieces and thus extremely finely-dispersed.

A general behavior of dispersing a resin as a minor component in another resin as a major component in the extruder is as follows. First, the whole of resins are softened by heat applied from a heater in the extruder. Then, the resins are melted when applying a shear stress thereto by rotation of the screw. At this time, the resin as the minor component is more stretched by the shear stress applied thereto, and then cut into pieces in the form of layers (i.e., dispersion) when further applying a shear stress thereto, and the cut pieces are uniformly scattered (distribution) throughout the resin mixture. The behavior of dispersion and distribution is repeated many times, so that the resin as the minor component is finely and uniformly kneaded in the major component.

In the structure of the present invention, in order to effectively enhance the barrier property thereof, the m-xylylene group-containing polyamide (C) is required to be dispersed in the form of layers therein, and therefore, the material is required to be extruded from a tip end of the extruder while the resin pellets are in the form of layers by being stretched by a shear stress in the extruder described above. As a method of realizing this, there are a method of reducing the rotating rate of the screw mainly and a method of optimizing the set temperature of the extruder. Although the method of reducing the rotating rate of the screw is seemingly a simple method, there are concerns that a decrease in the production efficiency is caused, and a decrease in the strength of the container is caused due to exposure of a parison to air for a long period of time, and therefore, the range of the application thereof is limited in some cases. For such a case, the method of controlling the resin temperature in the extruder is preferably used. Specifically, the control of the temperature of the extruder is preferably carried out so that the resin temperature when the material is melt-kneaded in the extruder is within the temperature range of the melting point of the m-xylylene group-containing polyamide (C) $\pm20°C$. The temperature range is more preferably the melting point of the m-xylylene group-containing polyamide (C) $\pm15°C$, and further more preferably the melting point of the m-xylylene group-containing polyamide (C) $\pm10°C$. It is preferred that as the resin temperature, a temperature determined by actually measuring the actual temperature of the resin extruded from the tip end of the extruder is adopted. However, in the case where how much to differ between a numerical value of the temperature measured by a thermocouple provided at the tip end of the extruder and the actual temperature of the resin is known to some extent, the temperature of the resin may be adjusted by referring to the numerical value. By carrying out the melt-kneading at a resin temperature which is not lower than the melting point of the m-xylylene group-containing polyamide (C) -20°C, the m-xylylene group-containing polyamide (C) is sufficiently softened, so that contamination of the molded article with unmolten pellets, or application of an excessive load to the motor of the extruder is prevented. Further, by setting the resin temperature to the melting point of the m-xylylene group-containing polyamide (C) +20°C or lower, the m-xylylene group-containing polyamide (C) is not completely melted, and therefore is prevented from being dispersed excessively by a shear stress generated by the rotation of the screw. As a result, the dispersion state in the form of layers in the resin composition is also maintained in the structure, and thus, the barrier property of the structure can be made favorable.

The structure obtained by the method of the present invention can adopt various shapes such as a container in the shape of a bottle, a cup, a tray, a tank, a drum, or the like, a tube, a pipe, and the like. The structure of the present invention can more effectively suppress the permeation of fuels such as gasoline, kerosene, and light oil, lubricating oils such as engine oils and brake oils, various sanitary goods such as bleaching agents, detergents, and shampoos, various chemical products such as ethanol and oxydol, various beverages such as vegetable juices and milk beverages, various goods such as condiments, or components contained in these materials therethrough as compared with conventional structures. Therefore, the structure of the present invention can be effectively used as a structure for enhancing the storage stability of goods.

Examples

Hereinafter, the present invention will be described in more detail with reference to Examples. Incidentally, in the Examples and so on, various evaluations were carried out by the following methods.

(1) MFR (g/10 min) of Polyethylene (A) and Acid-Modified Polyethylene (B)

The measurement was carried out at 190°C under a load of 2.16 kgf using a melt indexer manufactured by Toyo Seiki Seisaku-Sho, Ltd., according to JIS K 7210.

(2) Density (g/cm$^3$) of Polyethylene (A) and Acid-Modified Polyethylene (B)

By using a sheet forming device equipped with an extruder, a T-die, a cooling roll, a puller, etc., a single-layer sheet having a thickness of about 1 mm was formed. Subsequently, a test piece having a size of 50 mm in length and 50 mm in width was cut from the thus formed sheet, and the true specific gravity thereof was measured using a true specific gravity meter.

(3) Acid Value (mg/g) of Acid-Modified Polyethylene (B)

The measurement was carried out by neutralization titration according to JIS K 0070. 1 g of the acid-modified polyethylene was accurately weighed and dissolved in 100 mL of xylene at about 120°C while stirring. After completely dissolving the acid-modified polyethylene therein, a phenolphthalein solution was added thereto, and neutralization titration was carried out by using a 0.1 mol/L potassium hydroxide ethanol solution whose concentration was accurately determined in advance. The acid value was calculated according to the formula (3) from the dropping amount (T), the factor of the 0.1 mol/L potassium hydroxide ethanol solution (f), 1/10 of the formula weight: 56.11 of potassium hydroxide (5.611), and the mass of the acid-modified polyethylene (S).

$$\text{Acid value} = T \times f \times 5.611/S \qquad (3)$$

(4) Relative Viscosity of m-Xylylene Group-Containing Polyamide (C)

1 g of the m-xylylene group-containing polyamide was accurately weighed and dissolved in 100 mL of 96% sulfuric acid at 20 to 30°C while stirring. After completely dissolving the m-xylylene group-containing polyamide therein, a 5-mL of the resulting solution was rapidly sampled and placed in a Canon-Fenske viscometer. After the viscometer was left in a thermostatic chamber at 25°C for 10 minutes, a dropping time (t) of the solution was measured. Also, a dropping time (t0) of the 96% sulfuric acid itself was measured under the same conditions. The relative viscosity was calculated according to the following formula (2) from the t and t0:

$$\text{Relative Viscosity} = t/t0 \qquad (2)$$

(5) Fuel Barrier Property of Container

Into each of the containers produced in Examples and Comparative Examples, 400 mL of a pseudo-gasoline (toluene/isooctane/ethanol at a ratio of 45/45/10 vol%) was put, and then an opening of a mouth portion of the container was sealed with an aluminum foil and further plugged with a cap, and the total mass was measured and recorded. Subsequently, the container in which the pseudo-gasoline was enclosed was kept in an explosion-proof thermostatic chamber controlled at 40°C, and the total mass was recorded every 24 hours. When the mass loss rate became stable, the pseudo-gasoline in the container was withdrawn from the container, and immediately thereafter, the pseudo-gasoline was newly enclosed in the container again, and the measurement was continued in the same manner. The weight loss amount corresponds to the amount of the permeated pseudo-gasoline. The permeation amount of the pseudo-gasoline was divided by the surface area of the container ($0.0429\ m^2$), whereby the pseudo-gasoline permeability ($g/m^2 \cdot day$) was determined.

(6) Drop Test at Room Temperature

Each of the containers produced in Examples and Comparative Examples was filled with 400 mL of water and closed by a cap. Then, after the temperature of the container was controlled for 4 hours in a thermostatic chamber at 23°C, the container was dropped with its bottom facing downward onto concrete from a height of 2 m 30 times in a continuous manner. The number of broken containers in the test among 5 containers was counted.

(7) Drop Test at Low Temperature

Each of the containers produced in Examples and Comparative Examples was filled with 400 mL of an antifreeze solution and closed by a cap. Then, after the temperature of the container was controlled for 4 hours in a thermostatic chamber at -20°C, the container was dropped with its bottom facing downward onto concrete from a height of 2 m 30 times in a continuous manner. The number of broken containers in the test among 5 containers was counted.

(8) Observation of Interface between Polyethylene (A) and m-Xylylene Group-Containing Polyamide (C) Dispersed in Resin Composition

A molded tank was cut, and the section of the tank was flattened and smoothened by a microtome (manufactured by Reichert-Jung Limited, trade name: Ultracut E). Thereafter, dilute iodine tincture (manufactured by Tsukishima Yakuhin Co., Ltd.) was applied to the section to dye the portion of the m-xylylene group-containing polyamide. Then, Pt-Pd was deposited thereon using a vapor deposition device (manufactured by Hitachi, Ltd., trade name: E102), and whereafter, the state of the interface between the polyethylene (A) and m-xylylene group-containing polyamide (C) in the resin composition was observed using an SEM (manufactured by Hitachi, Ltd., trade name: S-4800).

< Polyethylene (A) Used>

HDPE-1: Novatec HD HB420R (trade name), manufactured by Japan Polyethylene Corporation, MFR: 0.2, density: 0.956 g/cm$^3$

HDPE-2: Novatec HD HB439R (trade name), manufactured by Japan Polyethylene Corporation, MFR: 0.55, density: 0.96 g/cm$^3$

<Acid-Modified Polyethylene (B) Used>

AD-1: ADMER AT2490 (trade name), manufactured by Mitsui Chemicals, Incorporated, MFR: 0.3, density: 0.923 g/cm$^3$, acid value 19.0 mg/g

AD-2: Adtex L6100M (trade name), manufactured by Japan Polyethylene Corporation, MFR: 1.1, density: 0.92 g/cm$^3$, acid value 9.8 mg/g

AD-3: ADMER NB550 (trade name), manufactured by Mitsui Chemicals, Incorporated, MFR: 0.9, density: 0.92 g/cm$^3$, acid value 3.2 mg/g

<m-Xylylene Group-Containing Polyamide (C) Used>

PA-1: MX-Nylon S6121 (trade name), manufactured by Mitsubishi Gas Chemical Company, Inc., relative viscosity: 3.5, melting point: 238°C

PA-2: MX-Nylon S7007 (trade name), manufactured by Mitsubishi Gas Chemical Company, Inc., relative viscosity: 2.6, melting point: 229°C

Example 1

By using a single-layer direct blow container molding device equipped with a 50 mm single-screw extruder, an adaptor, a cylindrical die with a parison controller, a mold, a clamping device, a cooler, etc., mixed pellets prepared by dry-blending HDPE-1/AD-1/PA-1 at a ratio of 80/10/10 (% by mass) were put into a hopper of the extruder, and a parison was extruded therefrom by setting the temperature of the extruder cylinder to 210 to 235°C, the temperature of the adaptor to 235°C, the temperature of the die to 230°C and the screw rotating speed to 30 rpm, and the resulting parison was molded into a tank with a threaded plug, which had an internal volume of 450 mL and an average wall thickness of 3 mm, by a direct blow method.

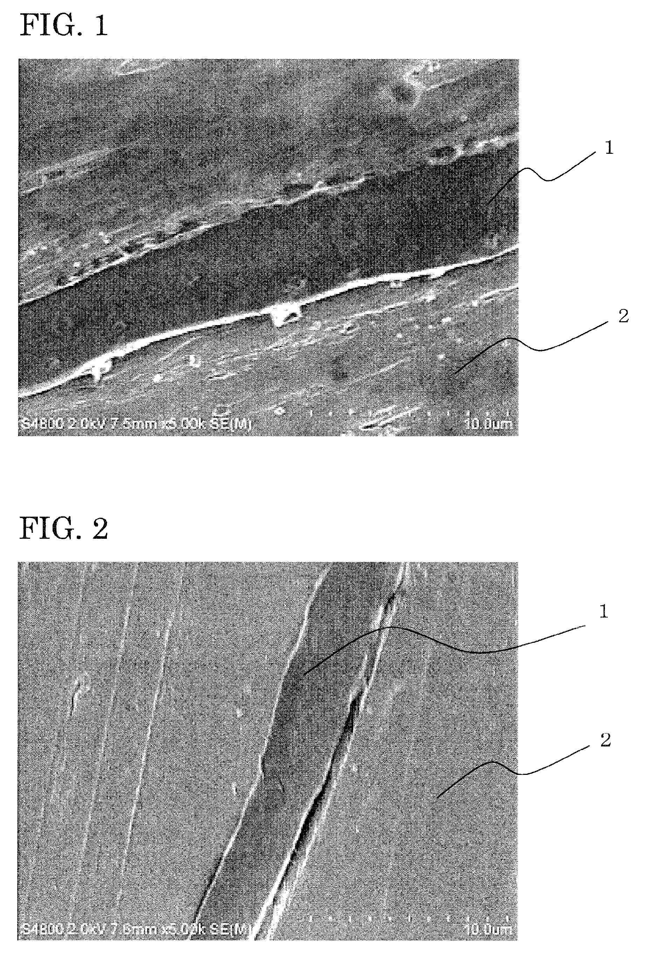

With respect to the obtained tank, measurement of pseudo-gasoline permeability and drop tests were carried out. The results are shown in Table 1. Further, an SEM image of a section of a side wall of the tank is shown in Fig. 1 (observation magnification: 5,000 times). In Fig. 1, a material obliquely crossing the center is the m-xylylene group-containing polyamide (C), and a material sandwiching the m-xylylene group-containing polyamide (C) is the polyethylene (A).

Examples 2 to 10

Tanks with a threaded plug were molded in the same manner as in Example 1 except that the types and compounding amounts of the polyethylene (A), the acid-modified polyethylene (B), and the m-xylylene group-containing polyamide (C) were changed as shown in Table 1.

With respect to the obtained tanks, measurement of pseudo-gasoline permeability and drop tests were carried out. The results are shown in Table 1.

Comparative Example 1

A tank with a threaded plug was molded in the same manner as in Example 1 except that only the polyethylene (A) was used.

With respect to the obtained tank, measurement of pseudo-gasoline permeability and drop tests were carried out. The results are shown in Table 1.

Comparative Examples 2 and 3

Tanks with a threaded plug were molded in the same manner as in Example 1 except that the types and compounding amounts of the polyethylene (A) and the acid-modified polyethylene (B) were changed as shown in Table 1.

With respect to the obtained tanks, measurement of pseudo-gasoline permeability and drop tests were carried out. The results are shown in Table 1. Further, an SEM image of a section of a side wall of the tank obtained in Comparative Example 2 is shown in Fig. 2 (observation magnification: 5,000 times). In Fig. 2, a material obliquely crossing the center is the m-xylylene group-containing polyamide (C), and a material sandwiching the m-xylylene group-containing polyamide (C) is the polyethylene (A).

Table 1

| | Polyethylene (A) | | Acid-modified polyethylene (B) | | | m-Xylylene group-containing polyamide (C) | | A acid value obtained by conversion [mg/g] | Pseudo-gasoline permeability [g/m$^2$·day] | Breakage upon dropping | |
| | type | mass ratio [%] | type | mass ratio [%] | acid value [mg/g] | type | mass ratio [%] | | | 23°C [number of broken containers/number of tested containers] | -20°C [number of broken containers/number of tested containers] |
|---|---|---|---|---|---|---|---|---|---|---|---|
| Example 1 | HDPE-1 | 80 | AD-1 | 10 | 19.0 | PA-1 | 10 | 19.0 | 1.0 | 0/5 | 0/5 |
| Example 2 | HDPE-1 | 70 | AD-1 | 20 | 19.0 | PA-1 | 10 | 38.0 | 0.8 | 0/5 | 0/5 |
| Example 3 | HDPE-1 | 85 | AD-1 | 5 | 19.0 | PA-1 | 10 | 9.5 | 1.2 | 0/5 | 0/5 |
| Example 4 | HDPE-1 | 85 | AD-1 | 10 | 19.0 | PA-1 | 5 | 38.0 | 1.6 | 0/5 | 0/5 |
| Example 5 | HDPE-1 | 80 | AD-2 | 10 | 9.8 | PA-1 | 10 | 9.8 | 1.3 | 0/5 | 1/5 |
| Example 6 | HDPE-1 | 70 | AD-2 | 20 | 9.8 | PA-1 | 10 | 19.6 | 0.9 | 0/5 | 0/5 |
| Example 7 | HDPE-1 | 60 | AD-2 | 30 | 9.8 | PA-1 | 10 | 29.4 | 1.0 | 0/5 | 0/5 |
| Example 8 | HDPE-1 | 85 | AD-2 | 10 | 9.8 | PA-1 | 5 | 19.6 | 2.0 | 0/5 | 0/5 |
| Example 9 | HDPE-2 | 80 | AD-1 | 10 | 19.0 | PA-1 | 10 | 19.0 | 1.1 | 0/5 | 0/5 |
| Example 10 | HDPE-1 | 80 | AD-1 | 10 | 19.0 | PA-2 | 10 | 19.0 | 1.3 | 0/5 | 0/5 |
| Comparative Example 1 | HDPE-1 | 100 | - | - | - | - | - | - | 18.2 | 0/5 | 0/5 |
| Comparative Example 2 | HDPE-1 | 80 | AD-3 | 10 | 3.2 | PA-1 | 10 | 3.2 | 2.8 | 0/5 | 4/5 |
| Comparative Example 3 | HDPE-1 | 70 | AD-3 | 20 | 3.2 | PA-1 | 10 | 6.4 | 1.5 | 0/5 | 2/5 |

The polyethylene-based structures of the present invention exhibited an excellent barrier property against the pseudo-gasoline in all the Examples. Further, the obtained structures had excellent drop strength, and breakage of the container did not occur at all upon dropping at room temperature. The section of a side wall of the container as the structure obtained in Example 1, which is representative of the Examples, was observed using an SEM (Fig. 1). As a result, it was confirmed that the polyethylene (A) and the m-xylylene group-containing polyamide (C) are tightly adhered to each other at the interface, and the adhesiveness at the interface is favorable.

On the other hand, in the case of Comparative Example 1 in which the structure is composed only of a high-density polyethylene, although the drop strength was excellent, the barrier property against the pseudo-gasoline was poor.

In the case of Comparative Example 2 in which the acid value is low, as a result of the SEM observation in the same manner as in Example 1 with respect to the section of a side wall of the container as the structure obtained (Fig. 2), peeling occurred at the interface because the adhesiveness between the polyethylene (A) and the m-xylylene group-containing polyamide (C) was poor, and due to this, the barrier property against the pseudo-gasoline was poor, and moreover, breakage of the container frequently occurred upon dropping at low temperature. Further, in the case of Comparative Example 3, since the addition amount of the acid-modified polyethylene (B) was increased as compared with Comparative Example 2, the barrier property against the pseudo-gasoline and the drop strength were enhanced as compared with Comparative Example 2, but were still poor as compared with the respective Examples.

Industrial Applicability

The polyethylene-based structure according to the present invention has an excellent barrier property against fuels or chemicals and an excellent barrier property against various gases such as oxygen, and further exhibits a strength suitable for practical use. The polyethylene-based structure according to the present invention can be suitably used in fuel tanks for working machines such as mowers and chainsaws, motor cycles, outboard motors, automobiles, etc., pipes for transportation of gasoline, pipe-shaped parts to be attached to fuel tanks, containers for agricultural chemicals, detergents for toiletry or sanitary purposes, and various chemical products, containers for foods, beverages, etc., and the like.

Reference Signs List

1: m-xylylene group-containing polyamide
2: resin composition

**Claims**

1. A polyethylene-based structure, comprising a resin composition containing: 60 to 90% by mass of a polyethylene (A); 5 to 35% by mass of an acid-modified polyethylene (B); and 5 to 35% by mass of a m-xylylene group-containing polyamide (C), wherein the m-xylylene group-containing polyamide (C) is dispersed in a form of layers in the structure, and an acid value of the acid-modified polyethylene (B) is from 5 to 30 mg/g.

2. The polyethylene-based structure according to claim 1, wherein the acid value is from 10 to 30 mg/g.

3. The polyethylene-based structure according to claim 1 or 2, wherein a density of the polyethylene (A) is from 0.94 to 0.97 $g/cm^3$, and a melt flow rate of the polyethylene (A) is from 0.1 to 1 (g/10 min, 190°C, 2.16 kgf).

4. The polyethylene-based structure according to any one of claims 1 to 3, wherein a density of the acid-modified polyethylene (B) is from 0.90 to 0.96 $g/cm^3$, and a melt flow rate of the acid-modified polyethylene (B) is from 0.1 to 5 (g/10 min, 190°C, 2.16 kgf).

5. The polyethylene-based structure according to any one of claims 1 to 4, wherein a relative viscosity of the m-xylylene group-containing polyamide (C) is from 2.5 to 4.5.

6. The polyethylene-based structure according to any one of claims 1 to 5, wherein the structure is a hollow molded article.

7. The polyethylene-based structure according to claim 6, wherein the hollow molded article has a shape of a tank, a pipe, a drum, or a bottle.

FIG. 1

FIG. 2

<table>
<tr><td colspan="2" align="center">INTERNATIONAL SEARCH REPORT</td><td colspan="2">International application No.<br>PCT/JP2012/084186</td></tr>
</table>

| A.    CLASSIFICATION OF SUBJECT MATTER |
|---|
| *C08J5/00*(2006.01)i, *C08L23/06*(2006.01)i |
| According to International Patent Classification (IPC) or to both national classification and IPC |

| B.    FIELDS SEARCHED |
|---|
| Minimum documentation searched (classification system followed by classification symbols)<br>C08J5/00, C08L |
| Documentation searched other than minimum documentation to the extent that such documents are included in the fields searched<br>    Jitsuyo Shinan Koho            1922-1996    Jitsuyo Shinan Toroku Koho      1996-2013<br>    Kokai Jitsuyo Shinan Koho     1971-2013    Toroku Jitsuyo Shinan Koho      1994-2013 |
| Electronic data base consulted during the international search (name of data base and, where practicable, search terms used) |

C.    DOCUMENTS CONSIDERED TO BE RELEVANT

| Category* | Citation of document, with indication, where appropriate, of the relevant passages | Relevant to claim No. |
|---|---|---|
| X<br>Y | WO 2012/121295 A1  (Mitsubishi Gas Chemical Co.,<br>Inc.),<br>13 September 2012 (13.09.2012),<br>claims; examples<br>(Family: none) | 1-7<br>1-7 |
| Y | JP 3-91547 A  (Sanyo Chemical Industries, Ltd.),<br>17 April 1991 (17.04.1991),<br>claims; Industrial Field of Invention; page 3,<br>lower right column, lines 13 to 18; page 4,<br>upper left column, line 3 to upper right column,<br>line 1; examples<br>(Family: none) | 1-7 |

| ☒    Further documents are listed in the continuation of Box C. | ☐    See patent family annex. |
|---|---|

| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |
|---|---|
| Date of the actual completion of the international search<br>    04 March, 2013 (04.03.13) | Date of mailing of the international search report<br>    12 March, 2013 (12.03.13) |
| Name and mailing address of the ISA/<br>    Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2012/084186

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-217509 A  (Mitsubishi Gas Chemical Co., Inc.),<br>30 August 2007 (30.08.2007),<br>entire text<br>(Family: none) | 1-7 |
| A | JP 2007-177208 A  (Mitsubishi Gas Chemical Co., Inc.),<br>12 July 2007 (12.07.2007),<br>entire text<br>& US 2006/0270799 A1    & EP 1752492 A1<br>& CN 1911993 A | 1-7 |
| A | JP 2005-206806 A  (Mitsubishi Gas Chemical Co., Inc.),<br>04 August 2005 (04.08.2005),<br>entire text<br>& US 2005/0143519 A1    & US 2007/0049692 A1<br>& EP 1548059 A1          & CN 1660929 A<br>& AU 2004242440 A | 1-7 |
| A | JP 2008-101108 A  (Mitsubishi Gas Chemical Co., Inc.),<br>01 May 2008 (01.05.2008),<br>entire text<br>& US 2010/0304164 A1    & EP 2082861 A1<br>& EP 2311622 A1          & EP 2397300 A2<br>& WO 2008/047902 A1      & KR 10-2009-0079200 A<br>& CN 101522388 A         & RU 2009118633 A<br>& CN 102336959 A         & CN 102731877 A | 1-7 |
| A | JP 5-508672 A  (Eastman Kodak Co.),<br>02 December 1993 (02.12.1993),<br>entire text<br>& US 5091469 A          & EP 536239 A1<br>& WO 1992/000364 A1      & CA 2078880 A | 1-7 |

Form PCT/ISA/210 (continuation of second sheet) (July 2009)

**EP 2 940 064 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 60006735 A
- JP 6328634 A
- JP 7052333 A
- JP 55121017 A
- JP 58209562 A
- JP 2005206806 A
- JP 2007177208 A